# EUROPEAN PATENT SPECIFICATION

(11) **EP 4 549 302 B1**
(45) Date of publication and mention of the grant of the patent: **29.04.2026**
(21) Application number: 23840867.8
(22) Date of filing: 25.12.2023
(51) Int. Cl.: B62M 7/00, B62J 43/16

(54) **POWER SYSTEM FOR ELECTRIC MOTORCYCLE AND ELECTRIC MOTORCYCLE**
ANTRIEBSSYSTEM FÜR EIN ELEKTRISCHES MOTORRAD UND ELEKTRISCHES MOTORRAD
SYSTÈME D'ALIMENTATION POUR MOTOCYCLETTE ÉLECTRIQUE, ET MOTOCYCLETTE ÉLECTRIQUE

(30) Priority: 15.09.2023 CN 202311194192
(43) Date of publication of application: 07.05.2025
(73) Proprietor: Horwin Inc., Changzhou, Jiangsu 213000 (CN)
(72) Inventor: WANG, Yang, Changzhou Jiangsu 213000 (CN); ZENG, Panhua, Changzhou Jiangsu 213000 (CN); XIANG, Weicun, Changzhou Jiangsu 213000 (CN)
(74) Representative: Bayramoglu et al.
(86) International application number: PCT/CN2023/141381
(87) International publication number: WO 2025/055201

(56) References cited:
- WO-A1-2012/014968
- WO-A1-2012/117641
- CN-A- 112 849 315
- CN-A- 112 849 315
- CN-A- 117 163 207
- CN-U- 217 134 839
- CN-U- 218 287 409
- CN-U- 218 287 409
- US-A1- 2016 318 580
- US-A1- 2018 141 608
- US-A1- 2018 244 165
- US-A1- 2023 150 376

## Description

### TECHNICAL FIELD

The present disclosure relates to the field of motorcycles, and in particular to a power system for an electric motorcycle and the electric motorcycle.

### BACKGROUND

This section is merely intended to provide background information related to the present disclosure, and does not necessarily constitute prior art.

With better performance and configurations of motorcycles and particularly electric motorcycles, there are increasingly high requirements on a power system of the motorcycles, and growing demands for motorcycles with a high power and a simple structure. In related art, the power system of an electric motorcycle is electrically connected with a cable. Specifically, a battery, a motor, and a control unit of the electric motorcycle are dispersed at different positions of the motorcycle. Between the battery, the motor, the control unit, and other electrical components, an electrical connection and a fluid connection are realized by external electrical cables and external fluid tubes.

However, the cable connection may have the following problems. The dispersed components take up a lot of space in the motorcycle, such that the intrinsically limited internal space has a lower utilization rate. Due to the electrical cables and the fluid tubes between these components, more complicated structures are formed in the motorcycle, with a low integration level. Moreover, under the influence of inartificial external forces such as a vibration or an accident, these external electrical cables and fluid tubes become poor in shock resistance, water resistance, and dust prevention. In addition, for a great number of the complicated electrical cables and fluid tubes, the whole motorcycle is heavier, such that more energy is consumed in driving of the motorcycle and an endurance of the motorcycle is reduced. WO2012/014968A1 discloses a battery device. The battery device is provided with: a battery in which terminal units used for charging are provided in two locations; a first battery charger and a second battery charger, which are electrically connected to one of the terminal units in the two locations in the battery and carry out charging; single communication buses provided to the battery and each battery charger for carrying out communications between the battery and the chargers via the terminal units; and terminators provided to the communications buses for the battery and each battery charger. The second battery charger is provided with a connection blocking unit which, when one of the terminal units of the battery is electrically connected to a battery charger, blocks the electrical connection to the other terminal unit of the battery.

### SUMMARY

An objective of the present disclosure is to provide a power system of an electric motorcycle, to at least partially solve the above problems. The objective of the present disclosure can be achieved by the following technical solutions:
A first aspect of the present disclosure provides a power system of an electric motorcycle, including a battery, a motor, and a control unit, where the battery includes a first battery connector and a second battery connector; the first battery connector and the second battery connector are respectively provided at different sides of the battery; the motor includes a motor connector; the control unit includes a control unit connector; the battery and the motor can be electrically connected through insertion of the first battery connector and the motor connector; and the battery and the control unit can be electrically connected through insertion of the second battery connector and the control unit connector. The battery further comprises a battery fluid interface, and the motor further comprises a motor fluid interface; and by inserting the battery into the motor: the first battery connector and the motor connector are electrically connected; and the battery fluid interface and the motor fluid interface are in fluid connection.

Preferably, no electrical cable is provided between the first battery connector and the motor connector of the power system; and no electrical cable is provided between the second battery connector and the control unit connector of the power system.

Preferably, the first battery connector is provided at a rear side of the battery; and the second battery connector is provided at a top side of the battery.

Preferably, the first battery connector and the second battery connector are fixed on a housing of the battery through a detachable connection, and the motor connector is fixed on the motor through a detachable connection.

Preferably, the control unit connector is fixed on a printed circuit board (PCB) of the control unit through a detachable connection and/or a non-detachable connection.

Preferably, the detachable connection comprises a threaded connection, a buckled connection or a hinged connection; and the non-detachable connection comprises welding, bonding or riveting.

Preferably, the battery further comprises a third battery connector electrically connected to a thermal management module of the electric motorcycle.

Preferably, by inserting the battery into the thermal management module: the third battery connector and the thermal management module are electrically connected; and the battery fluid interface and the thermal management module are in fluid connection.

Preferably, the battery fluid interface is provided in the first battery connector the second battery connector and/or the third battery connector; and/or the motor fluid interface is provided in the motor connector.

Preferably, the battery fluid interface comprises a battery fluid inlet and a battery fluid outlet respectively configured to allow a fluid to flow into the battery and flow out of the battery; and the motor fluid interface comprises a motor fluid inlet and a motor fluid outlet respectively configured to allow a fluid to flow into the motor and flow out of the motor.

Preferably, the motor connector comprises a motor connector base, a motor connector body, and a positioning pin; and the motor connector body and the positioning pin are provided on the motor connector base; the first battery connector comprises a first battery connector base and a first battery connector body, the first battery connector body is provided on the first battery connector base, and the first battery connector body comprises a positioning hole; and the positioning pin is capable of being inserted into the positioning hole, such that the motor connector body is inserted into the first battery connector body.

Preferably, the first battery connector further comprises a first battery connector sealing ring, and the first battery connector sealing ring is provided on the first battery connector base.

Preferably, the motor connector further comprises a motor connector sealing ring, and the motor connector sealing ring is provided on the motor connector body.

Preferably, the control unit connector comprises a control unit connector base, a control unit connector body, and a positioning pin; and the control unit connector body and the positioning pin are provided on the control unit connector base; the second battery connector comprises a second battery connector base and a second battery connector body, the second battery connector body is provided on the second battery connector base, and the second battery connector body comprises a positioning hole; and the positioning pin is capable of being inserted into the positioning hole, such that the control unit connector body is inserted into the second battery connector body.

Preferably, the second battery connector further comprises a second battery connector sealing ring, and the second battery connector sealing ring is provided on the second battery connector base.

Preferably, the control unit connector further comprises a control unit connector sealing ring, and the control unit connector sealing ring is provided on the control unit connector body.

Preferably, the control unit connector further comprises a connector terminal, and the connector terminal is capable of being welded on the PCB of the control unit.

Preferably, the control unit is a vehicle control unit (VCU) of the electric motorcycle.

A second aspect of the present disclosure provides an electric motorcycle including the power system defined above.

Preferably, the electric motorcycle is an all-electric motorcycle or a gasoline-electric hybrid motorcycle.

### BRIEF DESCRIPTION OF THE DRAWINGS

By reading the detailed description of the following preferred implementations, various other advantages and benefits will become apparent to those of ordinary skill in the art. The accompanying drawings are provided merely to illustrate the preferred implementations, rather than to limit the present disclosure. Throughout the accompanying drawings, the same reference numerals represent the same components. In the accompanying drawings:
FIG. 1 is a schematic view of a power system of an electric motorcycle according to an implementation of the present disclosure;
FIG. 2 is an exploded view of a power system of an electric motorcycle according to an implementation of the present disclosure;
FIG. 3 is a sectional view of a connection between a battery and a motor in a power system of an electric motorcycle according to an implementation of the present disclosure;
FIG. 4 is a structural view of a first battery connector and a motor connector in a power system of an electric motorcycle according to an implementation of the present disclosure;
FIG. 5 is a sectional view of a connection between a battery and a control unit in a power system of an electric motorcycle according to an implementation of the present disclosure;
FIG. 6 is a structural view of a second battery connector and a control unit connector in a power system of an electric motorcycle according to an implementation of the present disclosure;
FIG. 7 is a schematic view of a motor connecting port in a power system of an electric motorcycle according to an implementation of the present disclosure; and
FIG. 8 is a schematic view of a battery connecting port in a power system of an electric motorcycle according to an implementation of the present disclosure.

### DETAILED DESCRIPTION OF THE EMBODIMENTS

Exemplary implementations of the present disclosure will be described below in more detail with reference to the accompanying drawings. Although the accompanying drawings show exemplary implementations of the present disclosure, it should be understood that the present disclosure may be implemented in various forms and should not be limited to the implementations set forth herein. On the contrary, these implementations are provided so that the present disclosure will be more fully understandable, and will fully convey the scope of the present disclosure to those skilled in the art.

It is to be understood that the terms used in the description of the present disclosure are for the purpose of describing specific exemplary implementations only and are not the limit to the present disclosure. As used herein, the singular forms such as "a", "an" and "the" are intended to include the plural forms as well, unless the context clearly indicates otherwise. The terms "include", "comprising" and "having" are inclusive, and specify the presence of stated features, elements, and/or components, but do not preclude the presence or addition of one or more other features, elements, components, and/or combinations thereof.

Although the terms such as first and second may be used herein to describe various elements, components, regions, layers and/or sections, these elements, components, regions, layers and/or sections should not be limited by these terms. These terms are only used to distinguish one element, component, region, layer or section from another region, layer or section. Unless the context clearly indicates otherwise, terms such as "first", "second" and "third" and other numerical terms do not imply a sequence or an order in use. **In** addition, in the description of the present disclosure, unless otherwise clearly specified and limited, the meanings of terms "mounting" and "connection" should be understood in a broad sense. For example, the connection may be a fixed connection, a removable connection or an integrated connection, and may be a direct connection or an indirect connection via an intermediate medium. **In** the description of the present disclosure, unless otherwise clearly specified and limited, terms such as "fixed" indicate that a plurality of components are coupled or fixed according to technical requirements, to realize mechanical assembly without affecting correct relative positions and a correct mutual relationship, such as a mechanical connection between a bolt and a threaded hole. Those skilled in the art may understand specific meanings of the foregoing terms in the present disclosure based on a specific situation.

Spatially relative terms, such as "upper", "middle", "lower", "inner" and "close", may be used herein for ease of description to describe one element or feature's relationship to another element or feature as illustrated in the figures. The spatially relative terms are intended to encompass different orientations of the device in use or operation in addition to the orientation depicted in the figures. For example, if the device in the figures is turned over, elements described as "below" or "beneath" other elements or features would then be oriented "on" the other elements or features or "above" the other elements or features. Thus, the exemplary term "below" can encompass both an orientation of above and below. The device may be otherwise oriented (rotated 90 degrees or at other orientations) and the spatially relative descriptors used herein shall be interpreted accordingly.

With development of new energy motorcycles, consumers impose increasingly high requirements on an endurance and a light weight of the electric motorcycles, while producers are eager to simplify a production process of the electric motorcycles. For the electric motorcycles, a power system mainly composed of a battery, a motor and a control unit is crucial for the endurance, electrical performance and power performance of the whole vehicle. **In** view of this, various power systems are provided by those skilled in the art in the motorcycle, so as to optimize a cable connection and improve an internal space utilization rate, thereby improving an endurance and an anti-jamming capability of the electric motorcycle, and simplifying a production process of the electric motorcycle.

It is creatively found by an inventor that if the battery, the motor and the control unit are connected (including an electrical connection and/or a fluid connection) in an insertion manner, at least one of the following technical effects can be achieved: First, with the insertion manner, various electrical components are modularly connected. The whole power system is only mechanically fixed upon insertion. This can simplify a production or assembly process of the electric motorcycle. Second, electrical cables and fluid tubes are provided in the various electrical components, but not provided externally. This improves airtightness of the whole power system, realizes better shock resistance, water resistance and dust prevention, and reduces a weight of the electric motorcycle, thereby improving the endurance of the electric motorcycle. Third, with modular integration of the battery, the motor and the control unit, a space utilization rate and a function integration level of the electric motorcycle can be effectively improved.

Embodiments of the present disclosure are described below with reference to various exemplary drawings.

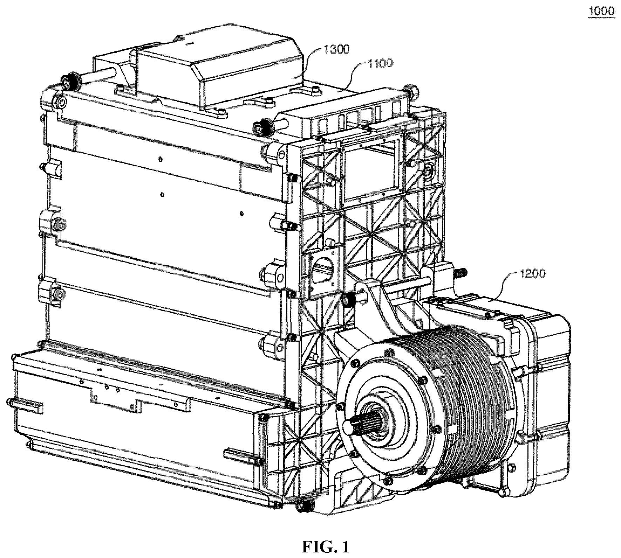

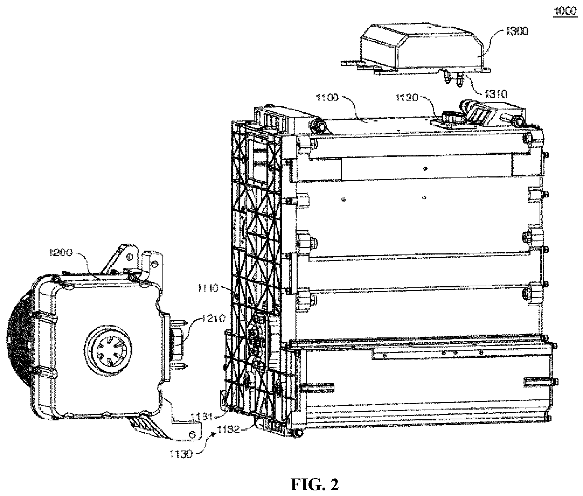

FIG. 1 and FIG. 2 illustrate power system 1000 of an electric motorcycle according to an implementation of the present disclosure. The electric motorcycle may be an all-electric motorcycle, and may also be a hybrid motorcycle driven by an electricity and a fuel. The power system 1000 may include battery 1100, motor 1200, and control unit 1300. Herein, the battery 1100 may form a battery pack and may be configured to provide energy required by the electric motorcycle. The motor 1200 may be configured to convert electric energy into mechanical energy, thereby driving the electric motorcycle. The control unit 1300 may be configured to acquire various signals of an electrical component (such as the battery, the motor, an actuator and a sensor) of the electric motorcycle, perform corresponding processing and output a control signal to other electrical components, such that the electric motorcycle works normally as desired by a user (for example, controlling a gearbox of the electric motorcycle to obtain a gear, controlling a rotational speed of the motor to obtain a driving force, etc.). The battery, the motor and the control unit can constitute at least one part of the power system, and cooperate to work, thereby providing a driving force for the electric motorcycle and controlling a driving state of the electric motorcycle.

Preferably, the control unit may be a control unit integrated with at least one of vehicle control functions (such as a central control unit, a motor control unit, a variable speed control unit, and a battery management control unit), and may also be a control unit integrated with all of the vehicle control functions, namely a vehicle control unit (VCU). The VCU may be configured to acquire an input signal of each electrical component, and output a load control signal, such that the electric motorcycle works normally as desired by a driver. The VCU may further be configured for normal driving, brake energy feedback, energy management on the whole drive system and power battery, network management, fault diagnosis and treatment, vehicle state monitoring, etc.

As shown in FIG. 2, connectors, such as first battery connector 1110 and second battery connector 1120, may be respectively provided at different sides of the battery 1100. Motor connector 1210 may be provided on the motor 1200. Control unit connector 1310 may be provided on the control unit 1300. The first battery connector 1110 and the motor connector 1210 are directly inserted into each other, such that the battery 1100 and the motor 1200 may be electrically connected. Likewise, the second battery connector 1120 and the control unit connector 1310 are directly inserted into each other, such that the battery 1100 and the control unit 1300 may be electrically connected. A plurality of threaded holes may further be formed in each of the motor 1200 and the control unit 1300. A plurality of threaded holes may be formed in the battery 1100 and corresponding to the threaded holes in the motor and the threaded holes in the control unit. By allowing bolts to sequentially pass through the threaded holes in the battery, the threaded holes in the motor and the threaded holes in the control unit and fixing the bolts therein, the battery and the motor, as well as the battery and the control unit, are electrically connected and mechanically fixed at the same time. It is to be understood that a mechanical connection between these components may be a detachable connection, and may also be a non-detachable connection or an integrated connection. The detachable connection includes, but is not limited to, a threaded connection, a buckled connection and a hinged connection. The non-detachable connection includes, but is not limited to, welding, bonding and riveting. Each connector can be fixed according to an actual demand, and is unnecessarily shown by the figure.

Preferably, an electrical connection piece of the battery 1100 for connecting the motor 1200 may be integrated to the first battery connector 1110. An electrical cable of the motor 1200 for connecting the battery 1100 is integrated to the motor connector 1210. Hence, by directly inserting the first battery connector 1110 and the motor connector 1210 into each other, electrical contacts in the two connectors are switched on correspondingly and are electrically connected. Likewise, an electrical connection piece of the battery 1100 for connecting the control unit 1300 may be integrated to the second battery connector 1120. An electrical cable of the control unit 1300 for connecting the battery 1100 is integrated to the control unit connector 1310. Hence, by directly inserting the second battery connector 1120 and the control unit connector 1310 into each other, electrical contacts in the two connectors are switched on correspondingly and are electrically connected.

It is advantageous that any external electrical cable, namely any external electrical lead, cannot be connected between the first battery connector 1110 and the motor connector 1210, as well as between the second battery connector 1120 and the control unit connector 1310. All electrical connections between the battery and the motor can be integrated to the first battery connector and the motor connector. All electrical connections between the battery and the control unit can be integrated to the second battery connector and the control unit connector. This not only can simplify connection and assembly of cables of the electric motorcycle, but also achieves better shock absorption, water resistance and dust prevention of the power system, thereby improving a stability in driving. Within a scope of the present disclosure, the electrical cable can be understood as any physical connecting cable capable of realizing an electrical connection or transmitting a current between the electrical devices, such as a copper bar, a lead and a wiring terminal.

In a preferred implementation, the first battery connector 1110 is provided at a rear side of the battery 1100, and the second battery connector 1120 is provided at a top side of the battery 1100, thereby completing assembly of the power system. The rear side may refer to a side of the battery away from a windward side of the electric motorcycle, and the top side may refer to a side of the battery away from the ground in a vertical direction. Therefore, the motor 1200 for driving a rear wheel of the electric motorcycle can be correspondingly inserted into the rear side of the battery. This facilitates a driving connection between the motor 1200 and the rear wheel. The control unit at the top side of the battery cannot be affected by other components. The control unit can also be symmetric with respective to a central axis of the electric motorcycle, such that the motorcycle body is balanced more easily, and the electric motorcycle has a better balance.

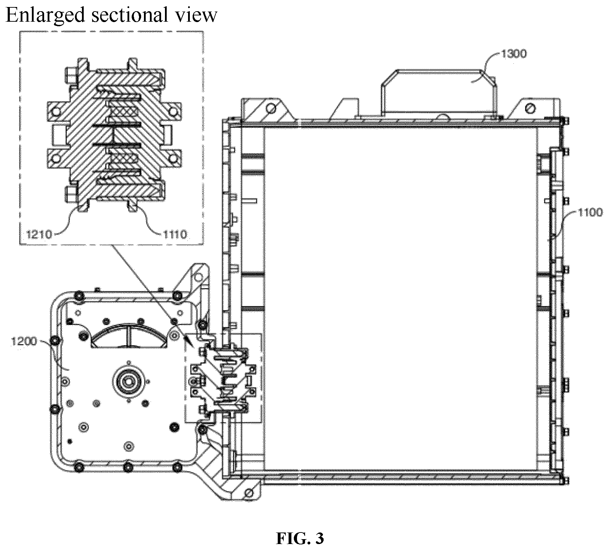

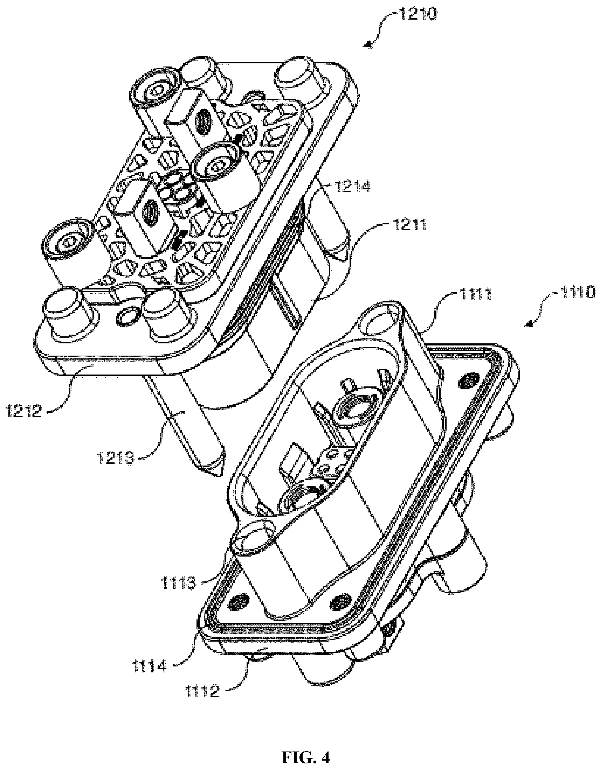

FIG. 3 and FIG. 4 illustrate a connection between the battery and the motor, and particularly an exemplary structure of the first battery connector and the motor connector. In the exemplary implementation shown in the figures, the first battery connector 1110 may include first battery connector base 1112 and first battery connector body 1111 provided or extending at one side or two sides of the first battery connector base. A plurality of first battery connector positioning holes 1113 (such as two or three first battery connector positioning holes) may further be formed in the first battery connector body. Likewise, the motor connector 1210 may include motor connector base 1212, motor connector body 1211 provided or extending on the motor connector base, and a plurality of motor connector positioning pins 1213 (such as two or three motor connector positioning pins). The motor connector positioning pins may extend out of the motor connector base 1212 and may be provided at two sides of the motor connector body 1211.

It is advantageous that the first battery connector body 1111 and the motor connector body 1211 can respectively form the integrated electrical connection piece of the battery for realizing the electrical connection and the integrated electrical connection piece of the motor for realizing the electrical connection. The first battery connector base 1112 and the motor connector base 1212 can respectively form a bearing base for all components of the first battery connector and a bearing base for all components of the motor connector, and form a base or a substrate for the insertion of the first battery connector and the motor connector. It is advantageous that the motor connector positioning pins 1213 correspond to the first battery connector positioning holes 1113 in quantity and arrangement. Specifically, the first battery connector positioning holes 1113 are respectively formed in two ends of the first battery connector body 1111 along a length direction. The motor connector positioning pins 1213 are respectively provided at inserting sides of the motor connector base 1212 and corresponding to the two first battery connector positioning holes. The two first battery connector positioning holes can cooperate with the two motor connector positioning pins 1213, such that the motor connector is limited in the first battery connector.

It is advantageous that first battery connector sealing ring 1114 is provided on the first battery connector base 1112, and particularly at a side of the first battery connector base for jointing the motor connector base 1212. Motor connector sealing ring 1214 is provided on the second motor connector body 1211, and particularly at a side of the second motor connector body for jointing the first battery connector body 1111 and/or the second motor. Preferably, the first battery connector sealing ring 1114 and the motor connector sealing ring 1214 respectively surround different joint surfaces, such that multiple sealing effects can be achieved through cooperation between the first battery connector and the motor connector. That is, between the first battery connector base and the motor connector base, as well as between the first battery connector body and the motor connector body, a sealing effect of an outer ring and a sealing effect of an inner ring are respectively achieved. Through the multiple sealing effects, not only can a connecting gap between the first battery connector and the motor connector be reduced as much as possible to achieve better dust prevention and water resistance of the insertion, but also the connectors can be more stable to each other to ensure normal work of internal electrical elements. In addition, a plurality of threaded holes may further be formed in each of the first battery connector base 1112 and the motor connector base 1212. By allowing bolts to sequentially pass through the threaded holes, the mechanical connection between the first battery connector 1110 and the motor connector 1210 is firmer and more stable.

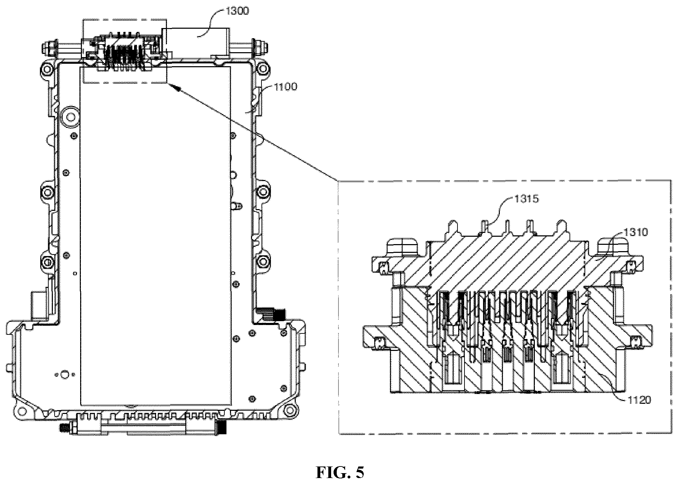

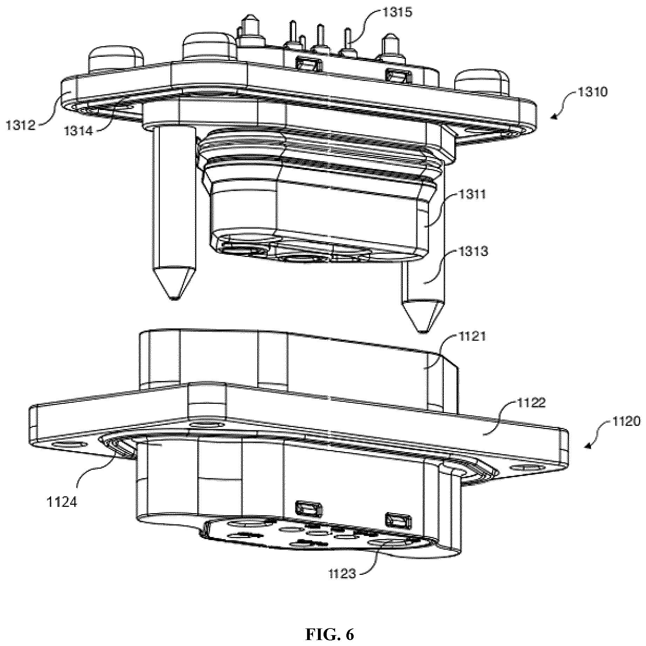

FIG. 5 and FIG. 6 illustrate a preferred connection between the battery and the control unit, and particularly an exemplary structure of the second battery connector and the control unit connector. In the exemplary implementation shown in the figures, the second battery connector 1120 may include second battery connector base 1122 and second battery connector body 1121 provided or extending at one side or two sides of the second battery connector base. A plurality of second battery connector positioning holes 1123 (such as two or three second battery connector positioning holes) are further formed in one or two of the second battery connector base and the second battery connector body. The control unit connector 1310 may include control unit connector base 1312 and control unit connector body 1311 provided or extending at one side or two sides of the control unit connector base. A plurality of control unit connector positioning pins 1313 (such as two or three control unit connector positioning pins) are provided on one or two of the control unit connector base and the control unit connector body. The second battery connector body 1121 and the control unit connector body 1311 can respectively form the integrated electrical connection piece of the battery for realizing the electrical connection and the integrated electrical connection piece of the motor for realizing the electrical connection. The second battery connector base 1122 and the control unit connector base 1312 can respectively form a bearing base for all components of the second battery connector and a bearing base for all components of the control unit connector, and form a base or a substrate for the insertion of the second battery connector and the control unit connector.

It is advantageous that second battery connector positioning holes 1123 are respectively formed in two ends of the second battery connector body 1121 along a length direction. Control unit connector positioning pins 1313 are provided on the control unit connector base 1312 and corresponding to the second battery connector positioning holes. Through mutual cooperation between the second battery connector positioning holes and the control unit connector positioning pins, the control unit connector can be inserted into and limited in the second battery connector.

It is advantageous that the control unit connector 1310 may include control unit connector sealing ring 1314. The control unit connector sealing ring may be preferably provided on a joint surface of the control unit connector body 1311 for jointing the second battery connector body 1121. In addition, the second battery connector 1120 may include second battery connector sealing ring 1124. The second battery connector sealing ring may be preferably provided on a joint surface of the second battery connector base 1122 for j ointing the control unit connector base 1312 and/or the second battery. In other words, a plurality of second battery connector sealing rings 1124 may be provided at two opposite surfaces of the second battery connector base 1122. It is advantageous that the second battery connector sealing ring 1124 and the control unit connector sealing ring 1314 respectively surround different joint surfaces, such that multiple sealing effects can be achieved through cooperation between the second battery connector and the control unit connector. That is, between the second battery connector base and the control unit connector base, as well as between the second battery connector body and the control unit connector body, a sealing effect of an outer ring and a sealing effect of an inner ring are respectively achieved. Through the multiple sealing effects, not only can a connecting gap between the second battery connector and the control unit connector be reduced as much as possible to achieve better dust prevention and water resistance of the insertion, but also the connectors can be more stable to each other to ensure normal work of internal electrical elements. In addition, a plurality of threaded holes may further be formed in each of the second battery connector base 1122 and the control unit connector base 1312. By allowing bolts to sequentially pass through the threaded holes, the mechanical connection between the second battery connector 1120 and the control unit connector is firmer and more stable.

It is further advantageous that the control unit connector 1310 may further include a control unit connector terminal 1315. The control unit connector terminal may pass through a printed circuit board (PCB) of the control unit and may be welded with the PCB 1320. Herein, the control unit connector 1310 is non-detachably fixed with the PCB 1320 together by welding. Thus, the mechanical connection and the electrical connection between the control unit and the battery can be firmer, and cannot become loose due to an inartificial external force such as a vibration or an accident.

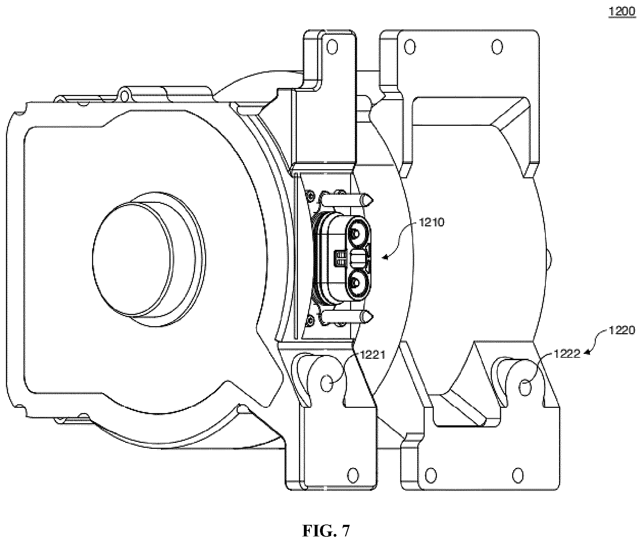

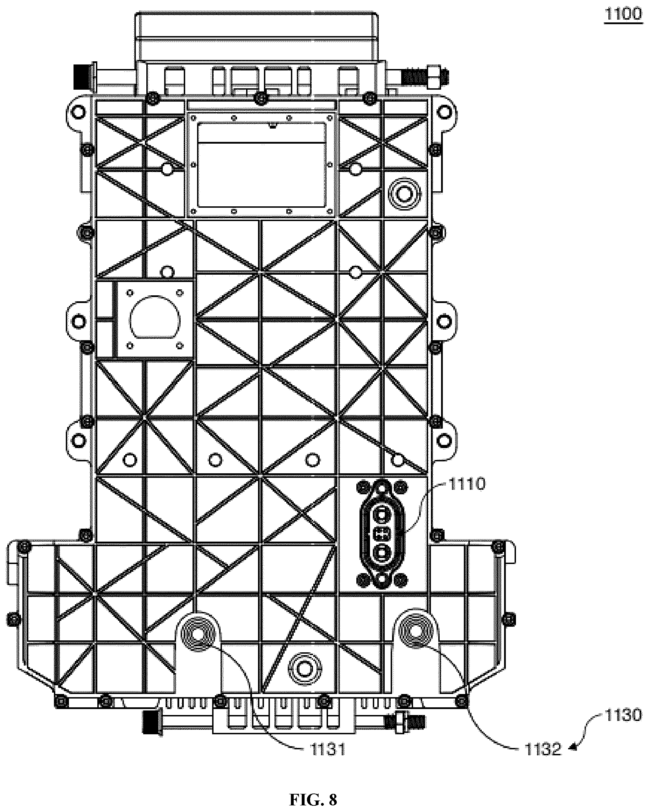

FIG. 7 and FIG. 8 illustrate a schematic view of a motor connecting port and a battery connecting port in a preferred power system. As shown in the figures, the motor 1200 and the battery 1100 each may include a fluid interface and an electrical interface. The motor fluid interface 1220 may include motor fluid inlet 1221 and motor fluid outlet 1222. Both the motor fluid inlet and the motor fluid outlet are preferably provided at a same side of the motor connector 1210, such that a fluid can flow in and out at the same time through one insertion. Likewise, the battery fluid interface may include battery fluid inlet 1131 and battery fluid outlet 1132. Both the battery fluid inlet and the battery fluid outlet are preferably provided at a same side of the battery connector 1120, such that a fluid can flow in and out at the same time through one insertion (at the same side). By correspondingly providing the battery fluid interface 1130 and the motor fluid interface 1220, and by directly inserting the first battery connector 1110 and the motor connector 1210, the motor 1100 and the battery 1200 can be electrically connected. In this case, the fluid (such as a coolant) for cooling the motor and/or the battery may flow to a fluid tube in the motor from a fluid tube in the battery through the battery fluid outlet 1132 and the motor fluid inlet 1221, and may also flow to the fluid tube in the battery from the fluid tube in the motor through the motor fluid outlet 1122 and the battery fluid inlet 1131, thereby forming a circular flow in the battery and/or the motor. It is advantageous that the fluid tube of the motor may be in fluid connection with a thermal management system through a housing of the battery, such that the fluid tube between the motor and the thermal management system is shorter. This reduces a flow resistance of the fluid and a complexity of the fluid tube, and can improve a space utilization rate and a thermal management effect in the motorcycle.

In a preferred implementation, the battery 1100 may further include third battery connector. The third battery connector is electrically connected to the thermal management module of the electric motorcycle. Preferably, the side of the battery 1100 provided with the third battery connector is further provided with a battery fluid interface. Through direct insertion of the third battery connector, an electrical connection and a fluid connection between the battery 1100 and the thermal management module are realized at the same time. Thus, the power system of the electric motorcycle is integrated with the thermal management system to improve function integration level of the electric motorcycle.

Although the fluid interface is provided out of the electrical interface in the figure, it is conceivable that the fluid interface may also be provided in the electrical interface, or integrated to one connector with the electrical interface. For example, the battery fluid interface may be provided in the first battery connector, the second battery connector and/or the third battery connector, and the motor fluid interface may also be provided in the motor connector. With an integrated arrangement, the electrical connection and the fluid connection can be integrated to one connector. Thus, through insertion of the same connector, the fluid connection and the electrical connection can be realized at the same time. It is to be noted that a number of interfaces in the connector and an arrangement thereof are not limited herein, and can be adjusted according to a demand for the tubes and the electrical cables or corresponding interfaces on the battery or the motor.

The present disclosure realizes the integrated power system for the electric motorcycle through the following implementations. The motor and the control unit are directly inserted into the battery through the connectors. This at least can make the power system mounted simply, and improve an internal space utilization rate and a function integration level of the electric motorcycle.

Item 1. A power system for an electric motorcycle includes: a battery including a first battery connector and a second battery connector, the first battery connector and the second battery connector being respectively provided at different sides of the battery; a motor including a motor connector; and a control unit including a control unit connector, where the battery and the motor are electrically connected through insertion of the first battery connector and the motor connector; and the battery and the control unit are electrically connected through insertion of the second battery connector and the control unit connector. The battery further comprises a battery fluid interface, and the motor further comprises a motor fluid interface; and by inserting the battery into the motor: the first battery connector and the motor connector are electrically connected; and the battery fluid interface and the motor fluid interface are in fluid connection.

Item 2. The power system according to item 1, where no electrical cable is provided between the first battery connector and the motor connector of the power system; and no electrical cable is provided between the second battery connector and the control unit connector of the power system.

Item 3. The power system according to item 1, where the first battery connector is provided at a rear side of the battery; and the second battery connector is provided at a top side of the battery.

Item 4. The power system according to item 1, where the first battery connector and the second battery connector are fixed on a housing of the battery through a detachable connection, and the motor connector is fixed on the motor through a detachable connection.

Item 5. The power system according to item 4, where the control unit connector is fixed on a PCB of the control unit through a detachable connection and/or a non-detachable connection.

Item 6. The power system according to item 5, where the detachable connection includes a threaded connection, a buckled connection or a hinged connection; and the non-detachable connection includes welding, bonding or riveting.

Item 7. The power system according to item 1, where the battery further includes a third battery connector electrically connected to a thermal management module of the electric motorcycle.

Item 8. The power system according to item 7, where by inserting the battery into the thermal management module: the third battery connector and the thermal management module are electrically connected; and the battery fluid interface and the thermal management module are in fluid connection.

Item 9. The power system according to item 7, where the battery fluid interface is provided in the first battery connector, the second battery connector and/or the third battery connector; and/or the motor fluid interface is provided in the motor connector.

Item 10. The power system according to item 1, where the battery fluid interface includes a battery fluid inlet and a battery fluid outlet respectively configured to allow a fluid to flow into the battery and flow out of the battery; and the motor fluid interface includes a motor fluid inlet and a motor fluid outlet respectively configured to allow a fluid to flow into the motor and flow out of the motor.

Item 11. The power system according to any one of items 1 to 6, where the motor connector includes a motor connector base, a motor connector body, and a positioning pin; and the motor connector body and the positioning pin are provided on the motor connector base; the first battery connector includes a first battery connector base and a first battery connector body, the first battery connector body is provided on the first battery connector base, and the first battery connector body includes a positioning hole; and the positioning pin is capable of being inserted into the positioning hole, such that the motor connector body is inserted into the first battery connector body.

Item 12. The power system according to item 11, where the first battery connector further includes a first battery connector sealing ring, and the first battery connector sealing ring is provided on the first battery connector base.

Item 13. The power system according to item 11, where the motor connector further includes a motor connector sealing ring, and the motor connector sealing ring is provided on the motor connector body.

Item 14. The power system according to any one of items 1 to 6, where the control unit connector includes a control unit connector base, a control unit connector body, and a positioning pin; and the control unit connector body and the positioning pin are provided on the control unit connector base; the second battery connector includes a second battery connector base and a second battery connector body, the second battery connector body is provided on the second battery connector base, and the second battery connector body includes a positioning hole; and the positioning pin is capable of being inserted into the positioning hole, such that the control unit connector body is inserted into the second battery connector body.

Item 15. The power system according to item 14, where the second battery connector further includes a second battery connector sealing ring, and the second battery connector sealing ring is provided on the second battery connector base.

Item 16. The power system according to item 14, where the control unit connector further includes a control unit connector sealing ring, and the control unit connector sealing ring is provided on the control unit connector body.

Item 17. The power system according to item 14, where the control unit connector further includes a connector terminal, and the connector terminal is capable of being welded on the PCB of the control unit.

Item 18. The power system according to any one of items 1 to 6, where the control unit is a vehicle control unit (VCU) of the electric motorcycle.

Item 19. An electric motorcycle, including the power system according to any one of items 1 to 18.

Item 20. The electric motorcycle according to item 19, where the electric motorcycle is an all-electric motorcycle or a gasoline-electric hybrid motorcycle.

The above merely describes preferred specific implementations of the present invention. Therefore, the protection scope of the present invention shall be subject to the protection scope of the claims.

## Claims

1. A power system (1000) for an electric motorcycle, comprising:
a battery (1100) comprising a first battery connector (1110) and a second battery connector (1120);
a motor (1200) comprising a motor connector (1210); and
a control unit (1300) comprising a control unit connector (1310),
wherein the battery (1100) and the motor (1200) are electrically connected through insertion of the first battery connector (1110) and the motor connector (1210); and
the battery (1100) and the control unit (1300) are electrically connected through insertion of the second battery connector (1120) and the control unit connector (1310);
**characterized in that**
the first battery connector (1110) and the second battery connector (1120) are respectively provided at different sides of the battery (1100);
wherein the battery (1100) further comprises a battery fluid interface (1130), and the motor (1200) further comprises a motor fluid interface (1220); and
by inserting the battery (1100) into the motor (1200):
the first battery connector (1110) and the motor connector (1210) are electrically connected; and
the battery fluid interface (1130) and the motor fluid interface (1220) are in fluid connection.

2. The power system (1000) according to claim 1, wherein
no electrical cable is provided between the first battery connector (1110) and the motor connector (1210) of the power system (1000); and
no electrical cable is provided between the second battery connector (1120) and the control unit connector (1310) of the power system (1000).

3. The power system (1000) according to claim 1, wherein
the first battery connector (1110) is provided at a rear side of the battery (1100); and
the second battery connector (1120) is provided at a top side of the battery (1100).

4. The power system (1000) according to claim 1, wherein
the first battery connector (1110) and the second battery connector (1120) are fixed on a housing of the battery (1100) through a detachable connection, and the motor connector (1210) is fixed on the motor (1200) through a detachable connection.

5. The power system (1000) according to claim 4, wherein
the control unit connector (1310) is fixed on a printed circuit board (PCB) of the control unit (1300) through a detachable connection and/or a non-detachable connection.

6. The power system (1000) according to claim 5, wherein
the detachable connection comprises a threaded connection, a buckled connection or a hinged connection; and
the non-detachable connection comprises welding, bonding or riveting.

7. The power system (1000) according to claim 1, wherein
the battery (1100) further comprises a third battery connector electrically connected to a thermal management module of the electric motorcycle.

8. The power system (1000) according to claim 7, wherein
by inserting the battery (1100) into the thermal management module:
the third battery connector and the thermal management module are electrically connected; and
the battery fluid interface (1130) and the thermal management module are in fluid connection.

9. The power system (1000) according to claim 7, wherein
the battery fluid interface (1130) is provided in the first battery connector (1110), the second battery connector (1120) and/or the third battery connector; and/or
the motor fluid interface (1220) is provided in the motor connector (1210).

10. The power system (1000) according to claim 1, wherein
the battery fluid interface (1130) comprises a battery fluid inlet (1131) and a battery fluid outlet (1132) respectively configured to allow a fluid to flow into the battery (1100) and flow out of the battery (1100); and
the motor fluid interface (1220) comprises a motor fluid inlet (1221) and a motor fluid outlet (1222) respectively configured to allow a fluid to flow into the motor (1200) and flow out of the motor (1200).

11. The power system (1000) according to any one of claims 1 to 6, wherein
the motor connector (1210) comprises a motor connector base (1212), a motor connector body (1211), and a positioning pin; and the motor connector body (1211) and the positioning pin are provided on the motor connector base (1212);
the first battery connector (1110) comprises a first battery connector base (1112) and a first battery connector body (1111), the first battery connector body (1111) is provided on the first battery connector base (1112), and the first battery connector body (1111) comprises a positioning hole; and
the positioning pin is capable of being inserted into the positioning hole, such that the motor connector body (1211) is inserted into the first battery connector body (1111).

12. The power system (1000) according to claim 11, wherein
the first battery connector (1110) further comprises a first battery connector sealing ring (1114), and the first battery connector sealing ring (1114) is provided on the first battery connector base (1112).

13. The power system (1000) according to claim 11, wherein
the motor connector (1210) further comprises a motor connector sealing ring (1214), and the motor connector sealing ring (1214) is provided on the motor connector body (1211).

14. The power system (1000) according to any one of claims 1 to 6, wherein
the control unit connector (1310) comprises a control unit connector base (1312), a control unit connector body (1311), and a positioning pin; and the control unit connector body (1311) and the positioning pin are provided on the control unit connector base (1312);
the second battery connector (1120) comprises a second battery connector base (1122) and a second battery connector body (1121), the second battery connector body (1121) is provided on the second battery connector base (1122), and the second battery connector body (1121) comprises a positioning hole; and
the positioning pin is capable of being inserted into the positioning hole, such that the control unit connector body (1311) is inserted into the second battery connector body (1121).

15. The power system (1000) according to claim 14, wherein
the second battery connector (1120) further comprises a second battery connector sealing ring (1124), and the second battery connector sealing ring (1124) is provided on the second battery connector base (1122).

16. The power system (1000) according to claim 14, wherein
the control unit connector (1310) further comprises a control unit connector sealing ring (1314), and the control unit connector sealing ring (1314) is provided on the control unit connector body (1311).

17. The power system (1000) according to claim 14, wherein
the control unit connector (1310) further comprises a connector terminal, and the connector terminal is capable of being welded on the PCB of the control unit (1300).

18. The power system (1000) according to any one of claims 1 to 6, wherein the control unit (1300) is a vehicle control unit (VCU) of the electric motorcycle.

19. An electric motorcycle, comprising the power system (1000) according to any one of claims 1 to 18.

20. The electric motorcycle according to claim 19, wherein the electric motorcycle is an all-electric motorcycle or a gasoline-electric hybrid motorcycle.

## Patentansprüche

1. Ein Leistungssystem (1000) für ein elektrisches Motorrad, umfassend:
eine Batterie (1100), die einen ersten Batterieverbinder (1110) und einen zweiten Batterieverbinder (1120) umfasst;
einen Motor (1200), der einen Motorverbinder (1210) umfasst; und
eine Steuereinheit (1300), die einen Steuereinheitsverbinder (1310) umfasst,
wobei die Batterie (1100) und der Motor (1200) durch Einstecken des ersten Batterieverbinder (1110) und des Motorverbinders (1210) elektrisch verbunden sind; und
die Batterie (1100) und die Steuereinheit (1300) durch Einstecken des zweiten Batterieverbinders (1120) und des Steuereinheitsverbinders (1310) elektrisch verbunden sind;
**dadurch gekennzeichnet, dass**
der erste Batterieverbinder (1110) und der zweite Batterieverbinder (1120) jeweils an unterschiedlichen Seiten der Batterie (1100) vorgesehen sind;
wobei die Batterie (1100) ferner eine Batterie-Fluidschnittstelle (1130) umfasst und der Motor (1200) ferner eine Motor-Fluidschnittstelle (1220) umfasst; und
durch Einsetzen der Batterie (1100) in den Motor (1200):
der erste Batterieverbinder (1110) und der Motorverbinder (1210) elektrisch verbunden sind; und
die Batterie-Fluidschnittstelle (1130) und die Motor-Fluidschnittstelle (1220) in Fluidverbindung stehen.

2. Leistungssystem (1000) nach Anspruch 1, wobei
kein elektrisches Kabel zwischen dem ersten Batterieverbinder (1110) und dem Motorverbinder (1210) des Leistungssystems (1000) vorgesehen ist; und
kein elektrisches Kabel zwischen dem zweiten Batterieverbinder (1120) und dem Steuereinheitsverbinder (1310) des Leistungssystems (1000) vorgesehen ist.

3. Leistungssystem (1000) nach Anspruch 1, wobei
der erste Batterieverbinder (1110) an einer Rückseite der Batterie (1100) vorgesehen ist; und
der zweite Batterieverbinder (1120) an einer Oberseite der Batterie (1100) vorgesehen ist.

4. Leistungssystem (1000) nach Anspruch 1, wobei
der erste Batterieverbinder (1110) und der zweite Batterieverbinder (1120) über eine lösbare Verbindung an einem Gehäuse der Batterie (1100) befestigt sind und der Motorverbinder (1210) über eine lösbare Verbindung am Motor (1200) befestigt ist.

5. Leistungssystem (1000) nach Anspruch 4, wobei
der Steuereinheitsverbinder (1310) über eine lösbare Verbindung und/oder eine nicht lösbare Verbindung an einer Leiterplatte (PCB) der Steuereinheit (1300) befestigt ist.

6. Leistungssystem (1000) nach Anspruch 5, wobei
die lösbare Verbindung eine Schraubverbindung, eine Rastverbindung oder eine Scharnierverbindung umfasst; und
die nicht lösbare Verbindung Schweißen, Kleben oder Nieten umfasst.

7. Leistungssystem (1000) nach Anspruch 1, wobei
die Batterie (1100) ferner einen dritten Batterieverbinder umfasst, der elektrisch mit einem Wärmemanagementmodul des elektrischen Motorrads verbunden ist.

8. Leistungssystem (1000) nach Anspruch 7, wobei
durch Einsetzen der Batterie (1100) in das Wärmemanagementmodul:
der dritte Batterieverbinder und das Wärmemanagementmodul elektrisch verbunden sind; und
die Batterie-Fluidschnittstelle (1130) und das Wärmemanagementmodul in Fluidverbindung stehen.

9. Leistungssystem (1000) nach Anspruch 7, wobei
die Batterie-Fluidschnittstelle (1130) im ersten Batterieverbinder (1110), im zweiten Batterieverbinder (1120) und/oder im dritten Batterieverbinder vorgesehen ist; und/oder
die Motor-Fluidschnittstelle (1220) im Motorverbinder (1210) vorgesehen ist.

10. Leistungssystem (1000) nach Anspruch 1, wobei
die Batterie-Fluidschnittstelle (1130) einen Batterie-Fluid-Einlass (1131) und einen Batterie-Fluid-Auslass (1132) umfasst, die jeweils dazu ausgebildet sind, einem Fluid das Einströmen in die Batterie (1100) und das Ausströmen aus der Batterie (1100) zu ermöglichen; und
die Motor-Fluidschnittstelle (1220) einen Motor-Fluid-Einlass (1221) und einen Motor-Fluid-Auslass (1222) umfasst, die jeweils dazu ausgebildet sind, einem Fluid das Einströmen in den Motor (1200) und das Ausströmen aus dem Motor (1200) zu ermöglichen.

11. Leistungssystem (1000) nach einem der Ansprüche 1 bis 6, wobei
der Motorverbinder (1210) eine Motorverbinderbasis (1212), einen Motorverbinderkörper (1211) und einen Positionierstift umfasst, und der Motorverbinderkörper (1211) und der Positionierstift auf der Motorverbinderbasis (1212) vorgesehen sind;
der erste Batterieverbinder (1110) eine erste Batterieverbinderbasis (1112) und einen ersten Batterieverbinderkörper (1111) umfasst, wobei der erste Batterieverbinderkörper (1111) auf der ersten Batterieverbinderbasis (1112) vorgesehen ist und der erste Batterieverbinderkörper (1111) eine Positionieröffnung umfasst; und
der Positionierstift in die Positionieröffnung einsetzbar ist, sodass der Motorverbinderkörper (1211) in den ersten Batterieverbinderkörper (1111) eingesetzt ist.

12. Leistungssystem (1000) nach Anspruch 11, wobei
der erste Batterieverbinder (1110) ferner einen ersten Batterieverbinder-Dichtring (1114) umfasst und der erste Batterieverbinder-Dichtring (1114) auf der ersten Batterieverbinderbasis (1112) vorgesehen ist.

13. Leistungssystem (1000) nach Anspruch 11, wobei
der Motorverbinder (1210) ferner einen Motorverbinder-Dichtring (1214) umfasst und der Motorverbinder-Dichtring (1214) auf dem Motorverbinderkörper (1211) vorgesehen ist.

14. Leistungssystem (1000) nach einem der Ansprüche 1 bis 6, wobei
der Steuereinheitsverbinder (1310) eine Steuereinheitsverbinderbasis (1312), einen Steuereinheitsverbinderkörper (1311) und einen Positionierstift umfasst, und der Steuereinheitsverbinderkörper (1311) und der Positionierstift auf der Steuereinheitsverbinderbasis (1312) vorgesehen sind;
der zweite Batterieverbinder (1120) eine zweite Batterieverbinderbasis (1122) und einen zweiten Batterieverbinderkörper (1121) umfasst, wobei der zweite Batterieverbinderkörper (1121) auf der zweiten Batterieverbinderbasis (1122) vorgesehen ist und der zweite Batterieverbinderkörper (1121) eine Positionieröffnung umfasst; und
der Positionierstift in die Positionieröffnung einsetzbar ist, sodass der Steuereinheitsverbinderkörper (1311) in den zweiten Batterieverbinderkörper (1121) eingesetzt ist.

15. Leistungssystem (1000) nach Anspruch 14, wobei
der zweite Batterieverbinder (1120) ferner einen zweiten Batterieverbinder-Dichtring (1124) umfasst und der zweite Batterieverbinder-Dichtring (1124) auf der zweiten Batterieverbinderbasis (1122) vorgesehen ist.

16. Leistungssystem (1000) nach Anspruch 14, wobei
der Steuereinheitsverbinder (1310) ferner einen Steuereinheitsverbinder-Dichtring (1314) umfasst und der Steuereinheitsverbinder-Dichtring (1314) auf dem Steuereinheitsverbinderkörper (1311) vorgesehen ist.

17. Leistungssystem (1000) nach Anspruch 14, wobei
der Steuereinheitsverbinder (1310) ferner einen Verbindungsanschluss umfasst, und der Verbindungsanschluss auf der Leiterplatte (PCB) der Steuereinheit (1300) verschweißbar ist.

18. Leistungssystem (1000) nach einem der Ansprüche 1 bis 6, wobei die Steuereinheit (1300) eine Fahrzeugsteuereinheit (VCU) des elektrischen Motorrads ist.

19. Elektrisches Motorrad, umfassend das Leistungssystem (1000) nach einem der Ansprüche 1 bis 18.

20. Elektrisches Motorrad nach Anspruch 19, wobei das elektrische Motorrad ein rein elektrisches Motorrad oder ein benzin-elektrisches Hybridmotorrad ist.

## Revendications

1. Système d'alimentation (1000) pour une motocyclette électrique, comprenant :
une batterie (1100) comprenant un premier connecteur de batterie (1110) et un deuxième connecteur de batterie (1120) ;
un moteur (1200) comprenant un connecteur de moteur (1210) ; et
une unité de commande (1300) comprenant un connecteur d'unité de commande (1310),
dans lequel la batterie (1100) et le moteur (1200) sont connectés électriquement par insertion du premier connecteur de batterie (1110) et du connecteur de moteur (1210) ; et
la batterie (1100) et l'unité de commande (1300) sont connectées électriquement par insertion du deuxième connecteur de batterie (1120) et du connecteur d'unité de commande (1310) ;
**caractérisé en ce que**
le premier connecteur de batterie (1110) et le deuxième connecteur de batterie (1120) sont ménagés respectivement au niveau de différents côtés de la batterie (1100) ;
dans lequel la batterie (1100) comprend en outre une interface de fluide de batterie (1130), et le moteur (1200) comprend en outre une interface de fluide de moteur (1220) ; et
par insertion de la batterie (1100) dans le moteur (1200) :
le premier connecteur de batterie (1110) et le connecteur de moteur (1210) sont connectés électriquement ; et
l'interface de fluide de batterie (1130) et l'interface de fluide de moteur (1220) sont en communication fluidique.

2. Système d'alimentation (1000) selon la revendication 1, dans lequel
aucun câble électrique n'est ménagé entre le premier connecteur de batterie (1110) et le connecteur de moteur (1210) du système d'alimentation (1000) ; et
aucun câble électrique n'est ménagé entre le deuxième connecteur de batterie (1120) et le connecteur d'unité de commande (1310) du système d'alimentation (1000).

3. Système d'alimentation (1000) selon la revendication 1, dans lequel
le premier connecteur de batterie (1110) est ménagé sur un côté arrière de la batterie (1100) ; et
le deuxième connecteur de batterie (1120) est ménagé au niveau d'un côté supérieur de la batterie (1100).

4. Système d'alimentation (1000) selon la revendication 1, dans lequel
le premier connecteur de batterie (1110) et le deuxième connecteur de batterie (1120) sont fixés sur un boîtier de la batterie (1100) à travers une connexion détachable, et le connecteur de moteur (1210) est fixé sur le moteur (1200) à travers une connexion détachable.

5. Système d'alimentation (1000) selon la revendication 4, dans lequel
le connecteur d'unité de commande (1310) est fixé sur un circuit imprimé (PCB) de l'unité de commande (1300) à travers une connexion détachable et/ou une connexion non-détachable.

6. Système d'alimentation (1000) selon la revendication 5, dans lequel
la connexion détachable comprend une connexion filetée, une connexion bouclée ou une connexion articulée ; et
la connexion non-détachable comprend le soudage, le collage ou le rivetage.

7. Système d'alimentation (1000) selon la revendication 1, dans lequel
la batterie (1100) comprend en outre un troisième connecteur de batterie connecté électriquement à un module de gestion thermique de la motocyclette électrique.

8. Système d'alimentation (1000) selon la revendication 7, dans lequel
par insertion de la batterie (1100) dans le module de gestion thermique :
le troisième connecteur de batterie et le module de gestion thermique sont connectés électriquement ; et
l'interface de fluide de batterie (1130) et le module de gestion thermique sont en communication fluidique.

9. Système d'alimentation (1000) selon la revendication 7, dans lequel
l'interface de fluide de batterie (1130) est ménagée dans le premier connecteur de batterie (1110), le deuxième connecteur de batterie (1120) et/ou le troisième connecteur de batterie ; et/ou
l'interface de fluide moteur (1220) est ménagée dans le connecteur de moteur (1210).

10. Système d'alimentation (1000) selon la revendication 1, dans lequel
l'interface de fluide de batterie (1130) comprend une entrée de fluide de batterie (1131) et une sortie de fluide de batterie (1132) configurées respectivement pour permettre à un fluide de s'écouler dans la batterie (1100) et de s'écouler hors de la batterie (1100) ; et
l'interface de fluide moteur (1220) comprend une entrée de fluide moteur (1221) et une sortie de fluide moteur (1222) configurées respectivement pour permettre à un fluide de s'écouler dans le moteur (1200) et de s'écouler hors du moteur (1200).

11. Système d'alimentation (1000) selon l'une quelconque des revendications 1 à 6, dans lequel
le connecteur de moteur (1210) comprend une base de connecteur de moteur (1212), un corps de connecteur de moteur (1211) et une broche de positionnement ; et le corps de connecteur de moteur (1211) et la broche de positionnement sont ménagés sur la base de connecteur de moteur (1212) ;
le premier connecteur de batterie (1110) comprend une première base de connecteur de batterie (1112) et un premier corps de connecteur de batterie (1111), le premier corps de connecteur de batterie (1111) est ménagé sur la première base de connecteur de batterie (1112), et le premier corps de connecteur de batterie (1111) comprend un trou de positionnement ; et
la broche de positionnement peut être insérée dans le trou de positionnement, de telle sorte que le corps de connecteur de moteur (1211) est inséré dans le premier corps de connecteur de batterie (1111).

12. Système d'alimentation (1000) selon la revendication 11, dans lequel
le premier connecteur de batterie (1110) comprend en outre une première bague d'étanchéité de connecteur de batterie (1114), et la première bague d'étanchéité de connecteur de batterie (1114) est ménagée sur la première base de connecteur de batterie (1112).

13. Système d'alimentation (1000) selon la revendication 11, dans lequel
le connecteur de moteur (1210) comprend en outre une bague d'étanchéité de connecteur de moteur (1214), et la bague d'étanchéité de connecteur de moteur (1214) est ménagée sur le corps de connecteur de moteur (1211).

14. Système d'alimentation (1000) selon l'une quelconque des revendications 1 à 6, dans lequel
le connecteur d'unité de commande (1310) comprend une base de connecteur d'unité de commande (1312), un corps de connecteur d'unité de commande (1311) et une broche de positionnement ; et le corps de connecteur d'unité de commande (1311) et la broche de positionnement sont ménagés sur la base de connecteur d'unité de commande (1312) ;
le deuxième connecteur de batterie (1120) comprend une deuxième base de connecteur de batterie (1122) et un deuxième corps de connecteur de batterie (1121), le deuxième corps de connecteur de batterie (1121) est ménagé sur la deuxième base de connecteur de batterie (1122), et le deuxième corps de connecteur de batterie (1121) comprend un trou de positionnement ; et
la broche de positionnement peut être insérée dans le trou de positionnement, de telle sorte que le corps de connecteur d'unité de commande (1311) est inséré dans le deuxième corps de connecteur de batterie (1121).

15. Système d'alimentation (1000) selon la revendication 14, dans lequel
le deuxième connecteur de batterie (1120) comprend en outre une deuxième bague d'étanchéité de connecteur de batterie (1124), et la deuxième bague d'étanchéité de connecteur de batterie (1124) est ménagée sur la deuxième base de connecteur de batterie (1122).

16. Système d'alimentation (1000) selon la revendication 14, dans lequel
le connecteur d'unité de commande (1310) comprend en outre une bague d'étanchéité de connecteur d'unité de commande (1314), et la bague d'étanchéité de connecteur d'unité de commande (1314) est ménagée sur le corps de connecteur d'unité de commande (1311).

17. Système d'alimentation (1000) selon la revendication 14, dans lequel
le connecteur d'unité de commande (1310) comprend en outre une borne de connecteur, et la borne de connecteur peut être soudée sur le circuit imprimé de l'unité de commande (1300).

18. Système d'alimentation (1000) selon l'une quelconque des revendications 1 à 6, dans lequel l'unité de commande (1300) est une unité de commande de véhicule (VCU) de la motocyclette électrique.

19. Motocyclette électrique, comprenant le système d'alimentation (1000) selon l'une quelconque des revendications 1 à 18.

20. Motocyclette électrique selon la revendication 19, dans laquelle la motocyclette électrique est une motocyclette tout électrique ou une motocyclette hybride essence-électrique.
